# EUROPEAN PATENT APPLICATION

(11) **EP 4 817 893 A1**
(43) Date of publication of application: **07.10.2026**
(21) Application number: 25216591.5
(22) Date of filing: 18.11.2025
(51) Int. Cl.: B44F 1/00, B60Q 3/14, G09F 13/00, B29C 48/00

(54) **A FILM INSERT, A VEHICLE AND METHOD THEREOF**

(30) Priority: 01.04.2025 DE 102025112640
(71) Applicant: Motherson Innovations Company Ltd., London E14 5HU (GB)
(72) Inventor: Perner, Lukas, 79111 Freiburg i.Br. (DE); Kolbe, Alena, 79185 Ebringen (DE)
(74) Representative: Westphal, Mussgnug & Partner Patentanwälte mbB

(57) **Abstract**

The present disclosure is directed to a film insert (100) configured with a three-dimensional surface structure for a vehicle. The film insert (100) comprises a base layer (102), a top layer (104) and an irregular grain pattern (106). The base layer (102) is configured to have a front side (102a) and a rear side (102b), the front side of adapted to receive the top layer (104). The top layer (104) comprises an active region (104a) configured to receive the irregular grain pattern (106). The grain pattern is printed over the top layer (104) by screen printing. The present disclosure is further directed to a vehicle comprising such film insert (100).

## Description

The present disclosure relates to a film insert with a three-dimension surface structure and a method for manufacturing the film insert. Further, the present disclosure relates to a vehicle comprising the film insert.

Decorative panels play an essential role in enhancing the aesthetic appeal of vehicle interiors and other similar applications. These elements often feature a decorative film insert sheet that is laminated onto their surface, allowing for a wide range of designs, textures, and finishes. Recent trends have shown a growing consumer preference for interior decorative articles that incorporate a diverse array of design features, which has led to an increased demand for innovation in this area.

To meet this evolving demand, there is a pressing need for the development of decorative interior trim panels and articles having the film insert that not only showcase appealing designs but also possess superior surface quality. One of the critical aspects of achieving high-quality lamination is the incorporation of a grain pattern. This grain pattern serves a dual purpose: it helps reduce air inclusions between the decorative sheet and the underlying component, and it is crucial for ensuring a smooth and flawless finish.

However, the lamination grain can inadvertently affect the illumination characteristics of the component. If the grain pattern is not carefully designed, it can lead to light distortion and the formation of bubbles during the lamination process. These imperfections can detract from the overall aesthetic quality and performance of the film insert.

US11203177B2 describes a decorative sheet which can impart, to molded resin articles, excellent design attractiveness and an excellent touch both due to a rugged shape. The decorative sheet comprises, superposed in the following order, a base layer, a surface layer which is constituted of a cured object obtained from a curable resin composition and has the rugged shape, and a removable thermoplastic resin film.

EP3088156 B2 described a method for producing an illuminable extension, wherein a film is coated having a first surface and a second surface. The first surface of the film is coated with a mask layer which is opaque except for light transmitting portion. The coating is carried out by screen printing. The second surface of the film is coated with mask layer which has pigmentation or scattering additives or a tinted property (acts like a diffuser).

There is therefore a need to develop a film insert with enhanced surface quality having superior aesthetic appeal.

Against the background, it is an object of the present disclosure to provide an improved film insert. In particular, it is the object to develop a film insert that provides durability, aesthetics and functions properties with high performance finish.

At least one of these objects is achieved by a film insert having the features of claim 1 and/or by a vehicle having the features of claim 12.

According to an aspect of the present disclosure, a film insert configured with a three-dimensional surface structure in particular for a vehicle is disclosed. The film insert may comprise a base layer, a top layer, and an irregular grain pattern. The base layer may have a front side and a rear side where the front side may be adapted to receive the top layer. The top layer may comprise an active region configured to receive the irregular grain pattern.

The irregular grain pattern may be configured to print over the top layer by screen printing.

In an embodiment, the top layer may be configured with a masking design and the base layer may be a transparent carrier.

In an embodiment, the top layer may be printed over the base layer by screen printing.

In an embodiment, the irregular grain pattern and the top layer may be configured to block light from a light source through covered portions of the top layer. The light source may be provided on the rear side of the base layer. The irregular grain pattern and the top layer may be further configured to allow illumination of light through visible portions of the top layer and irregular grain pattern.

In an embodiment, the base layer may be a thermoplastic material. The thermoplastic material may be any one of a TPO, a TPU, a TPE, a PO, PC, PMMA or a PVC.

In an embodiment, the three-dimensional surface structure may be any one of a graphic, an image, a pattern, or the combination thereof.

In an embodiment, thickness of the top layer may be in the range of 5-30 microns and thickness of the irregular grain pattern may be in the range of 70-120 microns.

According to another aspect of the present disclosure, a method for manufacturing a film insert with a three-dimensional surface structure for a vehicle is provided according to claims 1 to 10. The method may comprise steps of extrusion moulding of a transparent carrier to obtain a base layer. The base layer may comprise a front side and a rear side. The top layer with a masking design may be printed onto the front side of the base layer. The top layer may comprise an active region. The irregular grain patterns may be printed over the active region by screen printing to provide three-dimensional surface structure.

The present disclosure is also related to a vehicle with a film insert as described above.

The film insert of the present disclosure is particularly focused on ensuring that the decorative elements are not only aesthetically pleasing but also exhibit a high degree of reliability and durability over time, which is crucial in the demanding environment of automotive applications. A standout characteristic of this film insert is its enhanced resilience, which has been meticulously engineered to tackle prevalent challenges encountered during the lamination process. One such challenge is the formation of bubbles, which can occur when irregular grain patterns are used. These bubbles not only compromise the visual integrity of the surface but can also lead to premature wear and degradation of the material. By incorporating advanced materials and innovative manufacturing techniques, the film insert minimizes the risk of air inclusions during lamination, resulting in a smoother and more uniform finish. This resilience not only enhances the aesthetic quality of the film insert but also ensures a longer lifespan, making it a reliable choice for manufacturers and consumers alike.

The use of screen printing method for applying the irregular grain pattern is a critical aspect of the present disclosure. Screen printing allows for precise application of the decorative layer, enabling intricate designs and textures to be transferred onto the film insert with high fidelity. This method also facilitates better control over the thickness and distribution of the lamination material, which is vital for achieving a consistent appearance and performance.

By utilizing screen printing, complex grain patterns that appeal to contemporary design trends while ensuring that the lamination process remains efficient and reliable. This technique is particularly advantageous for producing custom or limited-edition designs, catering to a diverse range of consumer preferences.

It should be noted that the features set out individually in the following description can be combined with each other in any technically advantageous manner and set out other forms of the present disclosure. It should be understood, however, that the disclosure is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the disclosure. The figures are not necessarily drawn to scale. Like numbers used in the figures refer to like components. However, it will be understood that the use of a number to refer to a component in a given figure is not intended to limit the component in another figure labelled with the same number. The description further characterizes and specifies the present disclosure in particular in connection with the Figures.

Other aspects, advantages, and salient features of the present disclosure will become apparent to those skilled in the art from the following detailed description, which taken in conjunction with the annexed drawings, discloses exemplary embodiments of the disclosure, wherein:
Figure 1A illustrates a front view of a film insert according to an embodiment of the present disclosure;
Figure 1B illustrates a top view of the film insert according to an embodiment of the present disclosure; and
Figure 2 illustrates steps of a method for manufacturing the film insert of the present disclosure.

The foregoing objects, features and advantages of the present disclosure will become more apparent from the following detailed description related to the accompanying drawings. However, various modifications may be applied to the present disclosure, and the present disclosure may have various embodiments of the present disclosure. Hereinafter, specific embodiments of the present disclosure, which are illustrated in the drawings, will be described in detail.

In the following description, for purposes of explanation, numerous specific details are set forth in order to provide a thorough understanding of the present disclosure. It will be apparent, however, to one skilled in the art that the present disclosure can be practiced without these specific details. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

In the drawings, the thicknesses of layers and regions may be exaggerated for clarity. When it is indicated that an element or layer is "on" or "above" another element or layer, this comprises a case in which another layer or element is interposed therebetween as well as a case in which the element or layer is directly above the other element or layer. In principle, reference signs designate elements throughout the specification. In the following description, the same reference signs are used to designate elements, which have the same function within the same idea illustrated in the drawings of each embodiment of the present disclosure.

When detailed description of known functions or configurations related to the present disclosure is deemed to unnecessarily blur the gist of the disclosure, the detailed description thereof will be omitted. Also, numerals (e.g., first, second, etc.) used in the description herein are merely identifiers for distinguishing one element from another element.

In addition, the terms "module" and "unit" used to refer to elements in the following description are given or used in combination only in consideration of ease of writing the specification, and the terms themselves do not have distinct meanings or roles.

Furthermore, the use of a singular term, such as, "a" is not to be interpreted as limiting the number of components or details of particular components. Additionally, various terms and/or phrases describing or indicating a position or directional reference such as, but not limited to, "top", "bottom", "front", "rear", "forward", "rearward", "end", "outer", "inner", "left", "right", "vertical", "horizontal", etc. may relate to one or more particular components as seen generally from a user's vantage point during use or operation, and such terms and/or phrases are not to be interpreted as limiting, but merely as a representative basis for describing the disclosure to one skilled in the art. In addition, a suffix "region", "part", "unit" for a component used in the following description are given or mixed in consideration of only the ease of writing the specification, and do not have meanings or roles distinguished from each other.

The present disclosure provides a film insert comprising a base layer, a top layer, and an irregular grain pattern. The base layer may be a transparent carrier having a front side and a rear side and the front side may be adapted to receive the top layer. The top layer may be configured with a masking design having an active region to receive the irregular grain pattern. The irregular grain pattern may be printed over the active region of the top layer by screen printing.

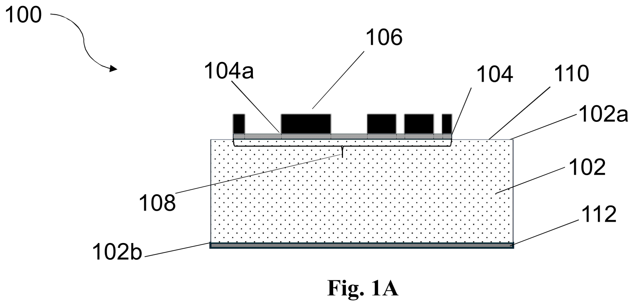

Figure 1A illustrates a side view of a film insert 100, configured with three-dimensional surface structure that enhances both the aesthetic and functional qualities of vehicle interiors. In this embodiment, the film insert 100 may comprises three primary components: a base layer 102, a top layer 104, and an irregular grain pattern 106. The base layer 102 may function as a transparent carrier, providing structural support while allowing light to permeate through, thereby enabling creative lighting effects within the vehicle. The base layer 102 may further comprises a front side 102a and a rear side 102b. The front side 102a may be specifically engineered to accommodate the application of the top layer 104. The top layer 104 may be applied to the front side 102a using an advanced screen printing technique, which allows for the precise deposition of decorative patterns and textures that enhance the visual appeal of the film insert 100. The film insert 100 ensures a high-quality finish but also facilitates the incorporation of unique designs, such as the aforementioned irregular grain pattern 106, which adds depth to the surface.

In an embodiment, the base layer 102 may be a thermoplastic material. The thermoplastic material may be any one of a TPO, a TPU, a TPE, a PO or a PVC.

In an embodiment, thickness of the top layer may be in range of 1 - 50 microns. More preferably, the thickness may be in the range of 3 - 40 microns, more preferably in the range of 5 - 30 microns.

In an embodiment, the top layer 104 may configured with a masking design. The top layer 104 may be configured to have an active region 104a to receive the irregular grain pattern 106. The irregular grain pattern may be screen printed over the active region 104a of the top layer 104.

In an embodiment, thickness of the irregular grain pattern 106 may be in the range of 50 - 140 microns. More preferably, the thickness may be in the range of 60 - 130 microns, preferably in the range of 70 - 120 microns.

In one embodiment, the irregular grain pattern 106 may serve as a crucial element in delivering the final aesthetic finish of the film insert 100 with three-dimensional surface structure that elevates the overall visual appeal and tactile experience. The pattern of the present disclosure not only enhances the aesthetic qualities of the film insert 100 but also contributes significantly to the tactile texture, providing users with a more engaging and sensory-rich interaction with the surface. The design flexibility allows the three-dimensional surface structure to take various forms, including graphics, images, patterns, or a combination of these elements, to create unique and customizable finishes that align with diverse automotive themes and consumer preferences.

In an embodiment, a light source 112 may be provided on the rear side 102b of the base layer 102. The light source may be configured to illuminate the base layer 102.

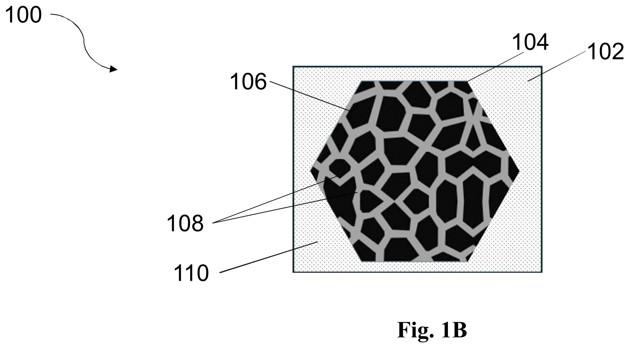

Figure 1B presents a top view of the film insert 100 comprising the base layer 102, the top layer 104, and the irregular grain pattern 106. The irregular grain pattern 106 may be configured to be applied at the top layer 104 in such a way that a covered portion 108 and a visible portion 110 is formed. The interplay between these two areas contributes to the visual complexity and depth of the film insert 100. When the light source 112 is activated, it may provide illumination onto the base layer 102, which is designed to be transparent and allows light to pass through effectively through the visible portion 110.

In an embodiment, when viewing from the top view as illustrated in the Figure 1B, the illumination may be clearly visible through the visible portion 110. Further, the covered portion 108 may block the light source illuminating through the top layer 104 and irregular grain pattern 106, thereby providing a three-dimensional surface structure for the film insert 100.

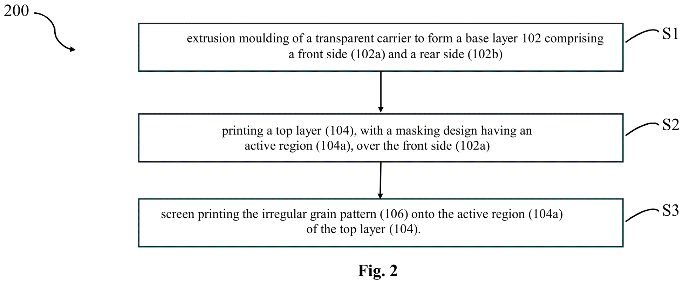

In another embodiment, a method 200 for manufacturing the film insert 100 configured with a three-dimensional surface structure is disclosed as shown in Figure 2. The method may comprise step S1 of extrusion moulding of a transparent carrier to form a base layer 102 comprising a front side 102a and a rear side 102. In step S2, a top layer 104 configured with a masking design may be screen printed over the front side 102a of the base layer 102. The top layer 104 may further comprise an active region 104a to receive an irregular grain pattern 106. In step S3, the irregular grain pattern 106 may be screen printed over the active region 104a of the top layer 104.

In an embodiment, the film insert 100 may be back injected with a translucent thermoplastic material into a trim element for the vehicle. The film insert 100 of the present disclosure may be used as a masking film with an additional function of a lamination grain for the trim element.

Although the subject matter of the present disclosure has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims. i.e. the features disclosed in the foregoing description, the claims, and the drawings may be essential, both individually and in any combination, for accomplishing the present disclosure in its various embodiments. The embodiments shown herein are only examples of the present disclosure and must therefore not be understood as being restrictive. Alternative embodiments considered by the skilled person are equally covered by the scope of protection of the present disclosure.

### Reference list

- 100: film insert
- 102: base layer
- 102a: front side
- 102b: rear side
- 104: top layer
- 104a: active region
- 106: irregular grain pattern
- 108: covered portion
- 110: visible portion
- 112: light source

## Claims

1. A film insert (100) configured with a three-dimensional surface structure for a vehicle, wherein the film insert (100) comprises:
a base layer (102), a top layer (104), and an irregular grain pattern, wherein
the base layer (102) is having a front side (102a) and a rear side (102b), wherein the front side (102a) is adapted to receive the top layer (104) and
the top layer (104) comprises an active region (104a) configured to receive the irregular grain pattern (106) and wherein the irregular grain pattern (106) is printed over the top layer (104) by screen printing.

2. The film insert (100) according to claim 1, wherein the top layer (104) is configured with a masking design.

3. The film insert (100) according to claim 1, wherein the irregular grain pattern (106) and the top layer are configured to block light from a light source through covered portion (108), wherein the light source (112) is provided on the rear side (102b) of the base layer (102).

4. The film insert (100) according to any of the preceding claims, wherein the irregular grain pattern (106) and the top layer are configured to allow illumination of light through visible portion (110).

5. The film insert (100) according to claim 1, wherein the base layer (102) is a transparent carrier.

6. The film insert (100) according to any of the preceding claims, wherein the base layer (102) is a thermoplastic material, wherein the thermoplastic material is any one of a TPO, a TPU, a TPE, a PO, PC, PMMA or a PVC.

7. The film insert (100) according to claim 1, wherein the three-dimensional surface structure is any one of a graphic, an image, a pattern, or the combination thereof.

8. The film insert (100) according to claim 1, wherein the top layer (104) is printed over the base layer (102) by screen printing.

9. The film insert (100) according to claim 1, wherein thickness of the top layer (104) is in the range of 5-30 microns.

10. The film insert (100) according to claim 1, wherein thickness of the irregular grain pattern (106) is in the range of 70-120 microns.

11. A method for manufacturing the film insert (100) configured with a three-dimensional surface structure for a vehicle according to claims 1 to 10, the method comprising following steps:
∘ extrusion moulding of a transparent carrier to form a base layer (102), the base layer (102) comprising a front side (102a) and a rear side (102b);
∘ printing the top layer (104), configured with a masking design, over the front side (102a) of the base layer (102), wherein the top layer (104) comprises an active region (104a); and
∘ screen printing the irregular grain pattern (106) onto the active region (104a) of the top layer (104).

12. A vehicle comprising the film insert (100) according to any one of the preceding claims.
